# EUROPEAN PATENT APPLICATION

(11) **EP 2 853 435 A2**
(43) Date of publication of application: **01.04.2015**
(21) Application number: 14185174.1
(22) Date of filing: 17.09.2014
(51) Int. Cl.: B60L 7/26, B60W 10/08, B60W 30/18

(54) **Electric vehicle**

(30) Priority: 26.09.2013 JP 2013200323
(71) Applicant: Yamaha Hatsudoki Kabushiki Kaisha, Iwata-shi, Shizuoka-ken 438 (JP)
(72) Inventor: Murakami, Atsushi, Shizuoka-ken, Shizuoka 438-8501 (JP); Murota, Naoki, Shizuoka-ken, Shizuoka 438-8501 (JP); Fujita, Hirokazu, Shizuoka-ken, Shizuoka 438-8501 (JP); Tada, Makoto, Shizuoka-ken, Shizuoka 438-8501 (JP); Wada, Toshiyuki, Shizuoka-ken, Shizuoka 438-8501 (JP)
(74) Representative: Zimmermann, Tankred Klaus

(57) **Abstract**

A torque for rotating a drive wheel is generated by a motor (8). An accelerator grip (42) is operated by a rider in order to adjust the torque of the motor (8). An operation amount of the accelerator grip (42) is detected by an accelerator sensor (AS). Further, a brake lever (43, 44) is operated by the rider in order to brake a main body. A controller (10) controls the motor (8) such that the torque of the motor (8) gradually decreases when the brake lever (43, 44) is switched from a non-operation state to an operation state with the torque being generated by the motor (8).

## Description

### BACKGROUND OF THE INVENTION

### Field of the Invention

The present invention relates to an electric vehicle that uses electric power as motive power.

### Description of Related Art

In an electric vehicle, an operation amount of an accelerator device such as accelerator grip is detected by an accelerator position sensor. The electric power supplied from a battery to a motor is adjusted based on the detection result. Thus, a torque generated by the motor is adjusted. In this manner, a rider operates the accelerator device, so that a speed of the electric vehicle can be adjusted.

### BRIEF SUMMARY OF THE INVENTION

An object of the present invention is to provide an electric vehicle in which a rider is unlikely to have an uncomfortable feeling at the time of operating a braking device or at the time of releasing operation of the braking device.

This object is achieved by an electric vehicle as defined in the independent claims.

When a problem occurs at the accelerator position sensor, however, the operation amount of the accelerator device may wrongly be detected. In that case, the electric vehicle may perform operation that differs from the intention of the rider. Therefore, it is necessary to stop the travelling of the electric vehicle in order to repair or exchange the accelerator position sensor.

In a two-wheel electric vehicle described in JP 2013-6468 A, if a brake device is operated during travelling, the energization to the motor is stopped. Therefore, even if a problem occurs at the accelerator position sensor, the two-wheel electric vehicle can easily be decelerated and stopped by the operation of the brake device.

When the energization to the motor is stopped, however, the torque of the motor rapidly decreases. Therefore, the rider may have an uncomfortable feeling at the time of operating the brake device. For example, the rider operates the brake device in turning the two-wheel electric vehicle. In that case, the torque of the motor rapidly decreases, and the rider has an uncomfortable feeling.

On the other hand, in this two-wheel electric vehicle, if the operation of the brake device is released while the accelerator device is operated, the torque of the motor rapidly increases. Also in this case, the rider has an uncomfortable feeling.
(1) According to one aspect of the present invention, an electric vehicle includes a main body having a drive wheel, a motor that generates a torque for rotating the drive wheel, an accelerator device operated by a rider in order to adjust the torque of the motor, an operation amount detector that detects an operation amount of the accelerator device, a braking device operated by the rider in order to brake the main body and a controller that controls the motor based on the operation amount detected by the operation amount detector and the operation of the braking device by the rider, wherein the controller controls the motor such that the torque of the motor gradually decreases when the braking device switches from a non-operation state to an operation state with the torque being generated by the motor. In this electric vehicle, the operation amount of the accelerator device by the rider is detected by the operation amount detector. The torque that corresponds to the detected operation amount is generated by the motor. The drive wheel is rotated by the torque of the motor, so that the main body is moved. On the other hand, the rider operates the braking device, so that the main body is braked.
   When the braking device is switched from the non-operation state to the operation state with the torque being generated by the motor, the torque of the motor gradually decreases. Thus, even in a state in which the operation amount of the accelerator device is wrongly detected, the main body can be easily decelerated and stopped. Further, because the torque of the motor does not rapidly decrease but gradually decreases, the rider is unlikely to have an uncomfortable feeling.
(2) The controller may store first torque information and second torque information that respectively indicate the torque to be generated by the motor according to a movement speed of the main body, may control the motor based on the first torque information with the braking device not being operated and may control the motor based on the second torque information with the braking device being operated, the first and second torque information may be set such that a value indicated by the second torque information with regard to each movement speed is smaller than a value indicated by the first torque information, and the controller may control the motor such that the torque of the motor gradually changes from the value indicated by the first torque information to the value indicated by the second torque information when the braking device switches from the non-operation state to the operation state with the torque being generated by the motor.
   In this case, because the value indicated by the second torque information is smaller than the value indicated by the first torque information with regard to each movement speed, the torque of the motor obtained when the braking device is operated is smaller than the torque of the motor obtained when the braking device is not operated. Therefore, the main body can be easily decelerated and stopped by the operation of the braking device. Further, at the time of the operation of the braking device, because the torque of the motor gradually changes from the value indicated by the first torque information to the value indicated by the second torque information, the rider is unlikely to have an uncomfortable feeling.
(3) According to another aspect of the present invention, an electric vehicle includes a main body having a drive wheel, a motor that generates a torque for rotating the drive wheel, an accelerator device operated by a rider in order to adjust the torque of the motor, an operation amount detector that detects an operation amount of the accelerator device, a braking device operated by the rider in order to brake the main body, and a controller that controls the motor based on operation of the accelerator device and the braking device by the rider, wherein the controller controls the motor such that the torque of the motor gradually increases when the braking device switches from an operation state to a non-operation state with the accelerator device being operated.
   In this electric vehicle, the operation amount of the accelerator device by the rider is detected by the operation amount detector. The torque that corresponds to the detected operation amount is generated by the motor. The drive wheel is rotated by the torque of the motor, and the main body is moved. On the other hand, the rider operates the braking device, so that the main body is braked.
   If the operation of the braking device is released while the accelerator device is operated, the torque of the motor does not rapidly increase but gradually increases. Therefore, the rider is unlikely to have an uncomfortable feeling, and sudden acceleration and a rapid increase in speed of the main body are prevented.
(4) The controller stores first torque information and second torque information that respectively indicate the torque to be generated by the motor according to a movement speed of the main body, controls the motor based on the first torque information with the braking device not being operated and controls the motor based on the second torque information with the braking device being operated, the first and second torque information are set such that a value indicated by the second torque information with regard to each movement speed is smaller than a value indicated by the first torque information, and the controller controls the motor such that the torque of the motor gradually changes from the value indicated by the second torque information to the value indicated by the first information when the braking device switches from the operation state to the non-operation state with the torque being generated by the motor.
   In this case, because the value indicated by the second torque information is smaller than the value indicated by the first torque information with regard to each movement speed, the torque of the motor obtained when the braking device is operated is smaller than the torque of the motor obtained when the braking device is not operated. Therefore, the main body can be easily decelerated and stopped by the operation of the braking device.
   Further, at the time of releasing the operation of the braking device, because the torque of the motor gradually changes from the value indicated by the second torque information to the value indicated by the first torque information, the rider is unlikely to have an uncomfortable feeling.
(5) The electric vehicle may further include a speed detector that detects a movement speed of the main body, wherein the first and second torque information may respectively indicate relation among the movement speed of the main body, the operation amount of the accelerator device and the torque to be generated by the motor, and the controller may control the motor based on the movement speed detected by the speed detector, the operation amount detected by the operation amount detector and the first and second torque information.
   In this case, in the operation state of the braking device, the motor is controlled according to the movement speed of the main body, the operation amount of the accelerator device and the first torque information. On the other hand, in the non-operation state of the braking device, the motor is controlled according to the movement speed of the main body, the operation amount of the accelerator device and the second torque information. Thus, the torque of the motor can be appropriately adjusted in either one of the operation state and the non-operation state of the braking device.
(6) The second torque information may be set to indicate a value larger than 0 when the operation amount of the accelerator device is larger than 0 and the movement speed of the main body is larger than 0 and is in a first range that is smaller than a predetermined value, and to indicate 0 when the operation amount of the accelerator device is larger than 0 and the movement speed of the main body is in a second range that is more than the predetermined value.
   In this case, when the main body is stopped and is moved at a low speed, if the operation amount of the accelerator device is larger than 0, the torque of the motor does not become 0 even if the braking device is operated. Thus, the main body can be stably stopped and started while climbing. On the other hand, the torque of the motor becomes 0 if the braking device is operated during a period in which the main body is moved at an intermediate or high speed. Therefore, the main body can be easily decelerated and stopped by the operation of the braking device.
(7) The second torque information may be set to indicate a value that decreases from a maximum value to 0 as the movement speed increases in the first range.
   In this case, in a state in which the accelerator device is operated and the braking device is operated, the lower the movement speed of the main body is, the larger the torque of the motor is. Therefore, the torque of the motor can be appropriately adjusted according to the movement speed of the main body.
(8) The electric vehicle may further include a battery, wherein the controller may adjust the torque of the motor by adjusting electric power supplied from the battery to the motor.

In this case, the torque of the motor can be easily adjusted.

The present invention causes that it is unlikely for the rider to have an uncomfortable feeling at the time of operating the braking device or releasing the operation of the braking device.

### BRIEF DESCRIPTION OF THE SEVERAL VIEWS OF THE DRAWING

Fig. 1 is a schematic side view showing the schematic configuration of an electric vehicle according to the present embodiment;
Fig. 2 is an external perspective view showing the configuration of a handle;
Fig. 3 is a block diagram showing the configuration of the control system of the electric vehicle;
Fig. 4 is a diagram showing one example of a normal torque map;
Fig. 5 is a diagram showing one example of a brake torque map;
Figs. 6A to 6C are diagrams for explaining the change of the actual torque obtained when the electric vehicle switches from a brake-off state to a brake-on state;
Figs. 7A to 7C are diagrams for explaining the change of the actual torque obtained when the electric vehicle switches from the brake-on state to the brake-off state;
Figs. 8A to 8C are diagrams for explaining the change of the actual torque obtained when the electric vehicle switches from the brake-off state to the brake-on state, and returns to the brake-off state;
Fig. 9 is a flow chart of a torque adjustment process performed by a CPU of Fig. 3;
Fig. 10 is a diagram showing another example of a normal torque map; and
Fig. 11 is a diagram showing another example of a brake torque map.

### DESCRIPTION OF THE PREFERRED EMBODIMENTS

An electric vehicle according to embodiments of the present invention will be described below.

### (1) Overall Configuration

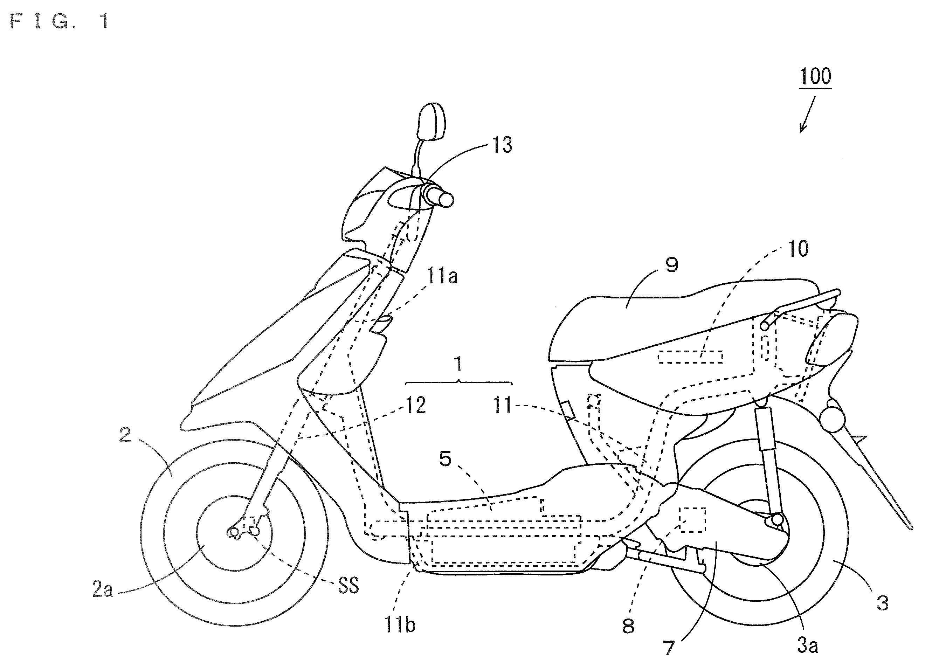

Fig. 1 is a schematic side view showing the schematic configuration of the electric vehicle according to the present embodiment. The electric vehicle according to the present embodiment is a motorcycle.

The electric vehicle 100 of Fig. 1 includes a main body 1. The main body 1 includes a main frame 11 and a front fork 12. The front fork 12 is attached to a head pipe 11a that is provided at the front end of the main frame 11 to be swingable to the right and the left. A front wheel 2 is supported at the lower end of the front fork 12 to be rotatable. A handle 13 is provided at the upper end of the front fork 12.

A battery storage 11b is provided at the substantially center of the main frame 11. A battery 5 is stored in the battery storage 11b. A rear arm cover 7 is provided behind the battery storage 11 b. A rear arm (not shown) and a motor 8 are arranged in the rear arm cover 7. A rear wheel 3 is supported by the rear arm to be rotatable. The motor 8 is driven by the electric power of the battery 5, and generates a torque for rotating the rear wheel 3. The torque of the motor 8 is transmitted to the rear wheel 3 via a chain or the like. A seat 9 is provided above the rear arm cover 7, and a controller 10 is provided at a position between the rear arm cover 7 and the seat 9.

A brake 2a is provided at the front wheel 2, and a brake 3a is provided at the rear wheel 3. The front wheel 2 is braked by the brake 2a, and the rear wheel 3 is braked by the brake 3a. The brake 2a is a disc brake, for example, and the brake 3a is a drum brake, for example. Further, a vehicle speed sensor SS is provided at the front wheel 2. The vehicle speed sensor SS detects the rotation speed of the front wheel 2. The movement speed (the vehicle speed) of the main body 1 is calculated from the detected rotation speed.

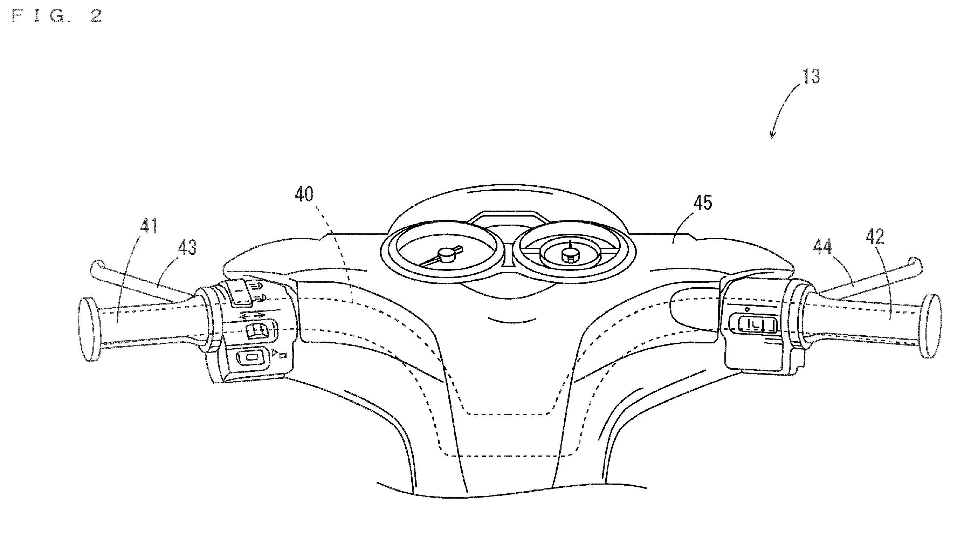

Fig. 2 is an external perspective view showing the configuration of the handle 13. In Fig. 2, the appearance of the handle 13 viewed from a rider who is seated on the seat 9 is shown. As shown in Fig. 2, the handle 13 includes a handle bar 40 that extends to the right and the left. A grip 41 is provided at the left end of the handle bar 40, and an accelerator grip 42 is provided at the right end of the handle bar 40. The accelerator grip 42 is provided to be rotatable in a predetermined rotation angular range with respect to the handle bar 40. The accelerator grip 42 is an example of an accelerator device. The accelerator device is operated by the rider in order to adjust the torque of the motor 8. In the present example, the accelerator grip 42 is operated, so that the torque generated by the motor 8 of Fig. 1 is adjusted.

A brake lever 43 for operating the brake 3a of the rear wheel 3 of Fig. 1 is arranged in front of the grip 41, and a brake lever 44 for operating the brake 2a of the front wheel 2 of Fig. 1 is arranged in front of the accelerator grip 42. The brake levers 43, 44 are examples of a braking device. The braking device is operated by the rider in order to brake the main body 1. In the present example, when the brake lever 43 is operated, the rear wheel 3 is braked by the brake 3a. When the brake lever 44 is operated, the front wheel 2 is braked by the brake 2a. Therefore, one or both of the brake levers 43, 44 is operated, so that the front body 1 is braked.

A main switch (not shown) is provided below the handle 13. The main switch is turned on, so that the electric power is supplied from the battery 5 to the controller 10 of Fig. 1.

### (2) Control System

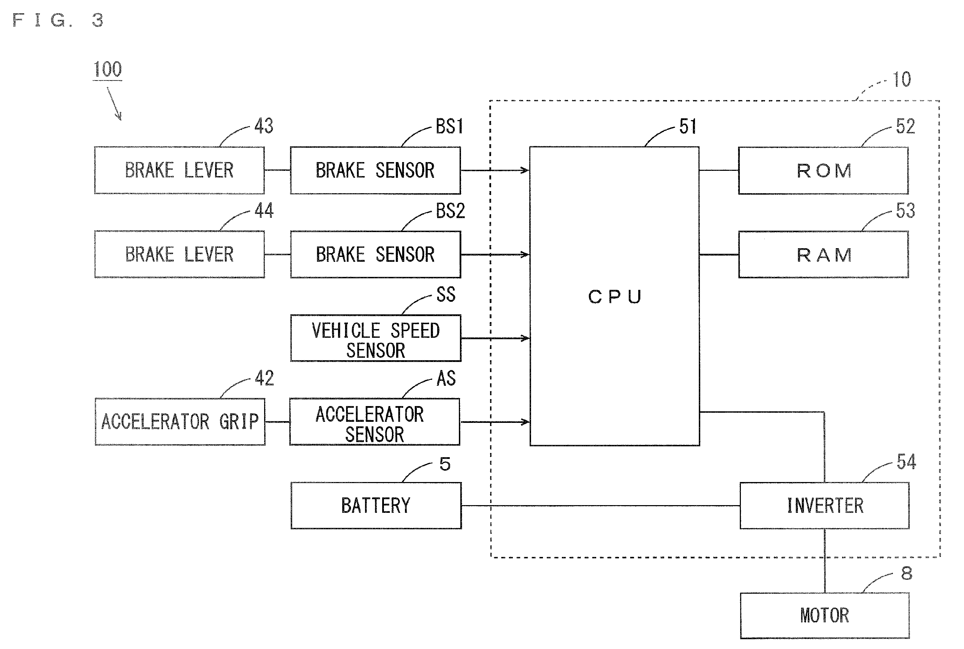

Fig. 3 is a block diagram showing the configuration of the control system of the electric vehicle 100. As shown in Fig. 3, the electric vehicle 100 includes brake sensors BS1, BS2 and an accelerator sensor AS.

The brake sensors BS1, BS2 respectively detect the presence or absence of the operation of the brake levers 43, 44. Specifically, when an operation amount of the brake lever 43 exceeds a threshold value, the operation of the brake lever 43 is detected by the brake sensor BS1. Similarly, when the operation amount of the brake lever 44 exceeds the threshold value, the operation of the brake lever 44 is detected by the brake sensor BS2. For example, a minimum value of the necessary operation amount of the brake levers 43, 44 in order to cause the brakes 2a, 3a to operate the front wheel 2 and the rear wheel 3 is set to the above-mentioned threshold value. The accelerator sensor AS detects the operation amount (the accelerator opening) of the accelerator grip 42.

The controller 10 includes a CPU (Central Processing Unit) 51, a ROM (Read Only Memory) 52, a RAM (Random Access Memory) 53 and an inverter 54. The detection results obtained by the brake sensors BS1, BS2, the vehicle speed sensor SS and the accelerator sensor AS are supplied to the CPU 51.

The ROM 52 is made of a nonvolatile memory, for example, and stores computer program such as system program of the CPU 51, the below-mentioned torque adjustment processing program and the like. Further, the ROM 52 stores the below-mentioned torque map. The RAM 53 is made of a volatile memory, for example, is used as a processing area of the CPU 51 and temporarily stores each type of data. The CPU 51 performs the below-mentioned torque adjustment process by executing the toque adjustment processing program stored in the ROM 52 on the RAM 53.

The inverter 54 is connected between the battery 5 and the motor 8. The electric power of the battery 5 is supplied to the motor 8 via the inverter 54. In this case, DC/AC (Direct Current/Alternate Current) conversion is performed by the inverter 54. Further, the electric power generated by the motor 8 is supplied to the battery 5 via the inverter 54, so that regenerative charging of the battery 5 is performed. In this case, AC/DC (Alternate Current/Direct Current) conversion is performed by the inverter 54.

The CPU 51 controls the inverter 54 based on the detection results obtained by the brake sensors BS1, BS2, the vehicle speed sensor SS and the accelerator sensor AS. Thus, the electric power supplied from the battery 5 to the motor 8 is adjusted, and the torque of the motor 8 is adjusted.

### (3) Torque Map

A torque map shows the relation between the vehicle speed and the torque (hereinafter referred to as a target torque) to be generated by the motor 8. The CPU 51 determines the target torque using the torque map stored in the ROM 52, and controls the inverter 54 such that the determined target torque is generated by the motor 8.

In the present embodiment, different torque maps are used between a case in which neither one of the brake levers 43, 44 is operated, and a case in which one or both of the brake levers 43, 44 is operated. Hereinafter, a state in which neither one of the brake levers 43, 44 is used is referred to as a brake-off state, and a state in which one or both of the brake levers 43, 44 is used is referred to as a brake-on state. The torque map used in the brake-off state is referred to as a normal torque map, and the torque map used in the brake-on state is referred to as a brake torque map.

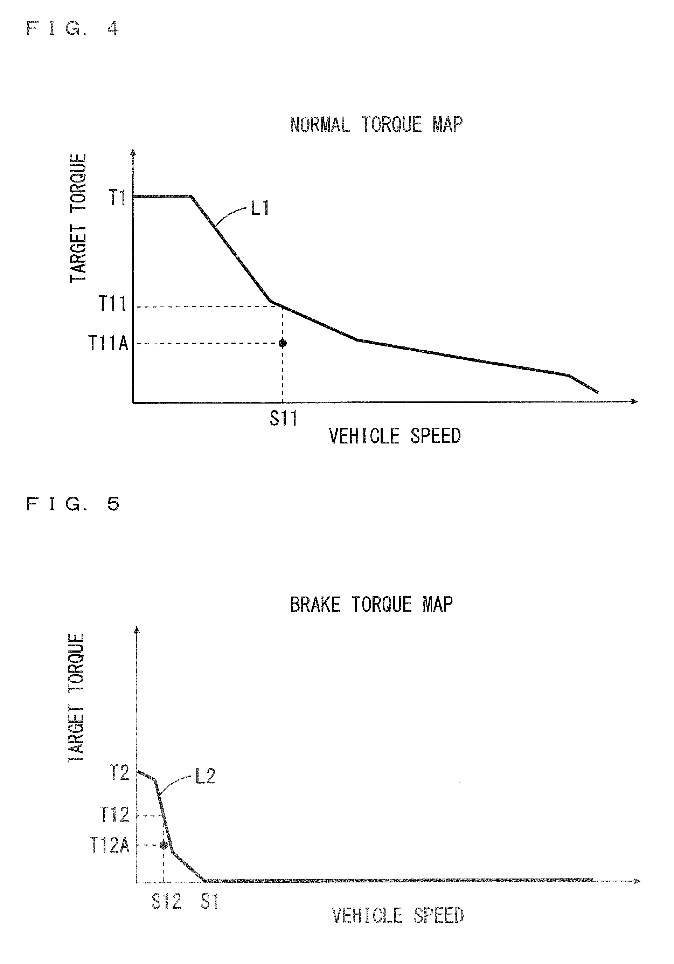

Fig. 4 is a diagram showing one example of the normal torque map. Fig. 5 is a diagram showing one example of the brake torque map. In Figs. 4 and 5, the abscissas indicate the vehicle speed, and the ordinates indicate the target torque. The target torques differ depending on the accelerator opening, and the larger the accelerator opening is, the larger the target torque is. The solid line L1 of Fig. 4 and the solid line L2 of Fig. 5 respectively indicate the target torque (hereinafter referred to as a maximum target torque) obtained when the accelerator opening is at a maximum.

In the normal torque map of Fig. 4, in a case in which the vehicle speed is 0, the maximum target torque is T1, and the maximum target torque gradually decreases as the vehicle speed increases.

In the brake-off state, the target torque is calculated based on the vehicle speed detected by the vehicle speed sensor SS, the accelerator opening detected by the accelerator sensor AS and the normal torque map of Fig. 4.

First, the maximum target torque that corresponds to the detected vehicle speed is obtained from the normal torque map. For example, when the detected vehicle speed is S11, the maximum target torque T11 is obtained from the normal torque map. Subsequently, the obtained maximum target torque is multiplied by a value that corresponds to the detected accelerator opening. For example, when the detected accelerator opening is n percent (n is a value not less than 0 and not more than 100) with respect to the maximum value of the accelerator opening, the maximum target torque T11 is multiplied by n/100. Thus, a target torque T11A is calculated.

In the brake torque map of Fig. 5, in a case in which the vehicle speed is 0, the maximum target torque is T2, and when the vehicle speed is not less than 0 and is in a range of less than S1, the maximum target torque gradually decreases as the vehicle speed increases. The value T2 is smaller than the value T1 of Fig. 4. When the vehicle speed is in a range of not less than S1, the maximum target torque is 0. S1 is a value of not less than 10 km/h and not more than 30 km/h, for example. In the present example, the value S1 is 22 km/h. With regard to each vehicle speed, a value of the maximum target torque of the brake torque map is set to be smaller than a value of the maximum target torque of the normal torque map.

In the brake-on state, the target torque is calculated based on the vehicle speed detected by the vehicle speed sensor SS, the accelerator opening detected by the accelerator sensor AS and the brake torque map of Fig. 5.

When the detected vehicle speed is less than S1, the target torque is calculated using the brake torque map of Fig. 5 similarly to a case in which the normal torque map of Fig. 4 is used. For example, when the detected vehicle speed is S12, the maximum target torque T12 is obtained from the brake torque map. The obtained maximum target torque T12 is multiplied by a value that corresponds to the accelerator opening (n/100, for example). Thus, the target torque T12A is calculated. On the other hand, when the detected vehicle speed is not less than S1, the target torque is 0.

When the accelerator openings are the same, a value indicated by the brake torque map is smaller than a value indicated by the normal torque map with regard to each vehicle speed.

The inverter 54 (Fig. 3) is controlled based on the calculated target torque. Thus, in the brake-off state, the torque of the motor 8 is adjusted to a value indicated by the normal torque map. Further, in the brake-on state, the torque of the motor 8 is adjusted to a value indicated by the brake torque map.

### (4) Change of Target Torque

In the present embodiment, when the electric vehicle 100 switches from the brake-off state to the brake-on state, the torque of the motor 8 does not rapidly change but gradually changes from a value indicated by the normal torque map to a value indicated by the brake torque map. Further, when the electric vehicle 100 switches from the brake-on state to the brake-off state, the torque of the motor 8 does not rapidly change but gradually changes from a value indicated by the brake torque map to a value indicated by the normal torque map. Hereinafter, the torque actually generated by the motor 8 is referred to as an actual torque.

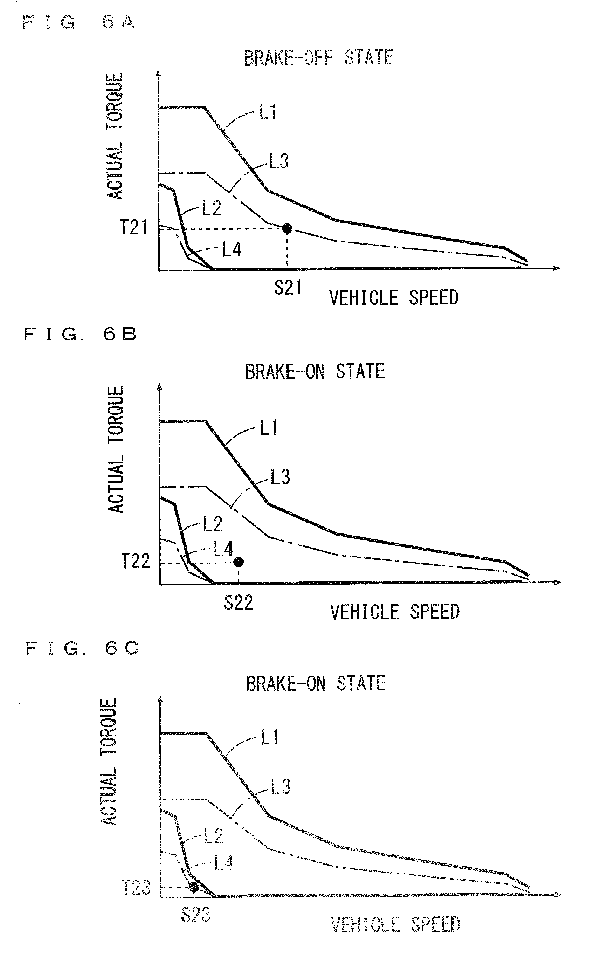

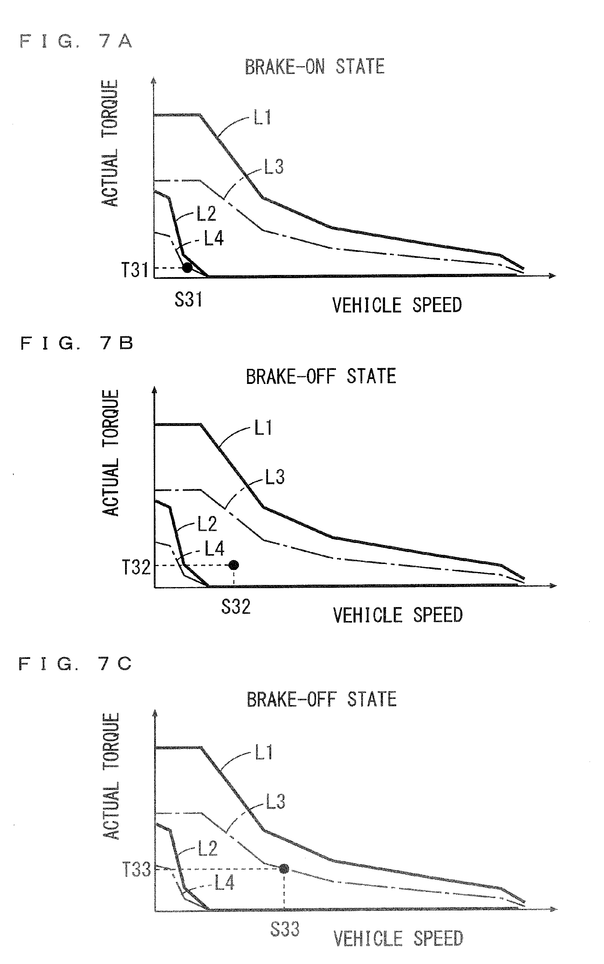

Figs. 6A to 6C are diagrams for explaining the change of the actual torque obtained when the electric vehicle 100 switches from the brake-off state to the brake-on state. Figs. 7A to 7C are diagrams for explaining the change of the actual torque obtained when the electric vehicle 100 switches from the brake-on state to the brake-off state. In Figs. 6A to 7C, the abscissas indicate the vehicle speed, and the ordinates indicate the actual torque.

In Figs. 6A to 7C, the solid line L1 of Fig. 4 and the solid line L2 of Fig. 5 that indicate the maximum target torques are shown, and the one-dot and dash lines L3, L4 that indicate the target torques obtained when the accelerator opening is smaller than the maximum value by a certain ratio. The target torques indicated by the one-dot dash lines L3 of Figs. 6A to 6C are smaller than the maximum target torques indicated by the solid line L1 by the certain ratio, and the target torques indicated by the one-dot dash lines L4 of Figs. 7A to 7C are smaller than the maximum target torques indicated by the solid lines L2 by the certain ratio.

The change of the actual torque obtained when the electric vehicle 100 switches from the brake-off state to the brake-on state will be described with reference to Figs. 6A to 6C. In the example of Figs. 6A to 6C, the accelerator opening is kept at a value that corresponds to the one-dot dash lines L3, L4. The accelerator opening that corresponds to the one-dot dash line L3 and the accelerator opening that corresponds to the one-dot dash line L4 are equal to each other.

As shown in Fig. 6A, in the brake-off state, the actual torque is adjusted based on the normal torque map to match a value on the one-dot dash line L3. In the present example, the actual torque is adjusted to T21 when the vehicle speed is S21. When the electric vehicle 100 switches to the brake-on state, the vehicle speed gradually decreases, and the actual torque gradually decreases as shown in Figs. 6B and 6C. In this case, the actual torque decreases with a predetermined time constant, for example. In the present example, the vehicle speed gradually decreases from the value S21 of Fig. 6A to a value S22 of Fig. 6B and then a value S23 of Fig. 6C, and the actual torque gradually decreases from the value T21 of Fig. 6A to a value T22 of Fig. 6B and then a value T23 of Fig. 6C. The value T23 is a value on the one-dot dash line L4. When the actual torque reaches a value on the one-dot dash line L4, the actual torque is thereafter adjusted based on the brake torque map to match a value on the one-dot dash line L4.

In this manner, when the electric vehicle 100 switches from the brake-off state to the brake-on state, the actual torque gradually decreases from a value indicated by the normal torque map to a value indicated by the brake torque map. Thereafter, the actual torque is adjusted to match a value indicated by the brake torque map.

The change of the actual torque obtained when the electric vehicle 100 switches from the brake-on state to the brake-off state with reference to Figs. 7A to 7C will be described. In the example of Figs. 7A to 7C, the accelerator opening is kept at a value that corresponds to the one-dot dash lines L3, L4.

As shown in Fig. 7A, in the brake-off state, the actual torque is adjusted based on the brake torque map to match a value indicated by the one-dot dash line L4. In the present example, when the vehicle speed is S31, the actual torque is adjusted to T31. When the electric vehicle 100 switches to the brake-off state, the vehicle speed gradually increases, and the actual torque gradually increases as shown in Figs. 7B and 7C. In this case, the actual torque increases at a predetermined time constant, for example. In the present example, the vehicle speed gradually increases from the value S31 of Fig. 7A to a value S32 of Fig. 7B and then to a value S33 of Fig. 7C, and the actual torque gradually increases from the value T31 of Fig. 7A to a value T32 of Fig. 7B and then a value T33 of Fig. 7C. The value T33 is a value indicated by the one-dot dash line L3. In this manner, when the actual torque reaches a value indicated by the one-dot dash line L3, the actual torque is thereafter adjusted based on the normal torque map to match a value indicated by the one-dot dash line L3.

In this manner, when the electric vehicle 100 switches from the brake-on state to the brake-off state, the actual torque gradually increases from a value indicated by the brake torque map to a value indicated by the normal torque map. Thereafter, the actual torque is adjusted to match a value indicated by the normal torque map.

Next, difference from the examples of Figs. 6A to 6C with regard to the change of the actual torque obtained when the electric vehicle 100 returns to the brake-off state after switching from the brake-off state to the brake-on state will be described.

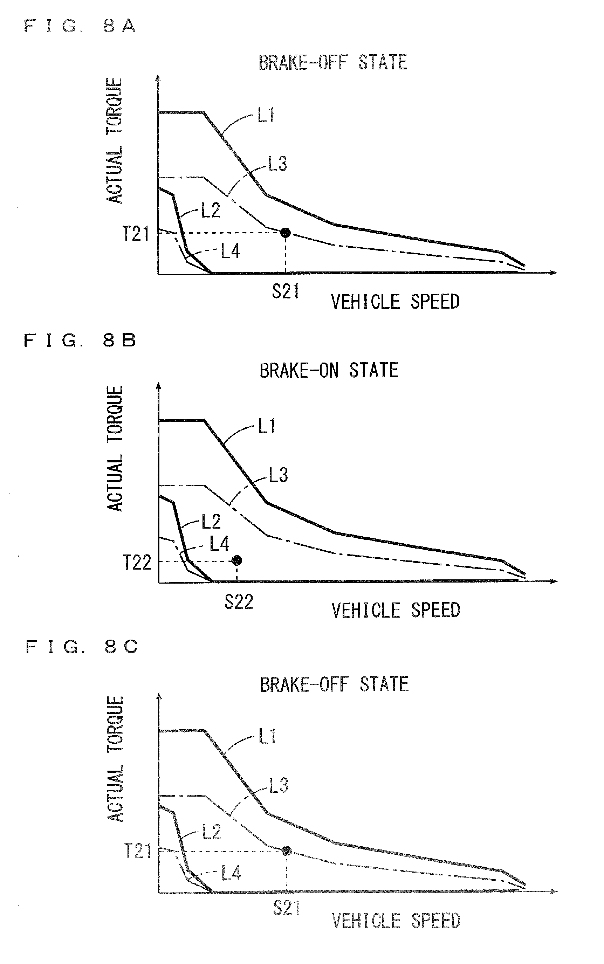

Figs. 8A to 8C are diagrams for explaining the change of the actual torque obtained when the electric vehicle 100 switches from the brake-off state to the brake-on state, and then returns to the brake-off state. In Figs. 8A to 8C, the abscissas indicate the vehicle speed, and the ordinates indicate the actual torque. In Figs. 8A to 8C, the solid lines L1, L2 and the one-dot dash lines L3, L4 are shown similarly to Figs. 6A to 7C. Even in the examples of Figs. 8A to 8C, the accelerator opening is kept at a value that corresponds to the one-dot dash line L3, L4.

In the examples of Figs. 8A to 8C, the electric vehicle 100 switches from the brake-on state to the brake-off state before the actual torque reaches a value on the one-dot dash line L4 after the electric vehicle 100 switches from the brake-off state to the brake-on state. Specifically, as shown in Fig. 8B, when the actual torque reaches the value T22 between the one-dot dash line L3 and the one-dot dash line L4, the electronic vehicle 100 switches from the brake-on state to the brake-off state. As shown in Figs. 8A and 8B, at the time of switching from the brake-off state to the brake-on state, the vehicle speed gradually decreases from the value S21 to the value S22, and the actual torque gradually decreases from the value T21 to the value T22. As shown in Figs. 8B and 8C, at the time of switching from the brake-on state to the brake-off state, the vehicle speed gradually increases from the value S22 to the value S21, and the actual torque gradually increases from the value T22 to the value T21.

### (5) Torque Adjustment Process

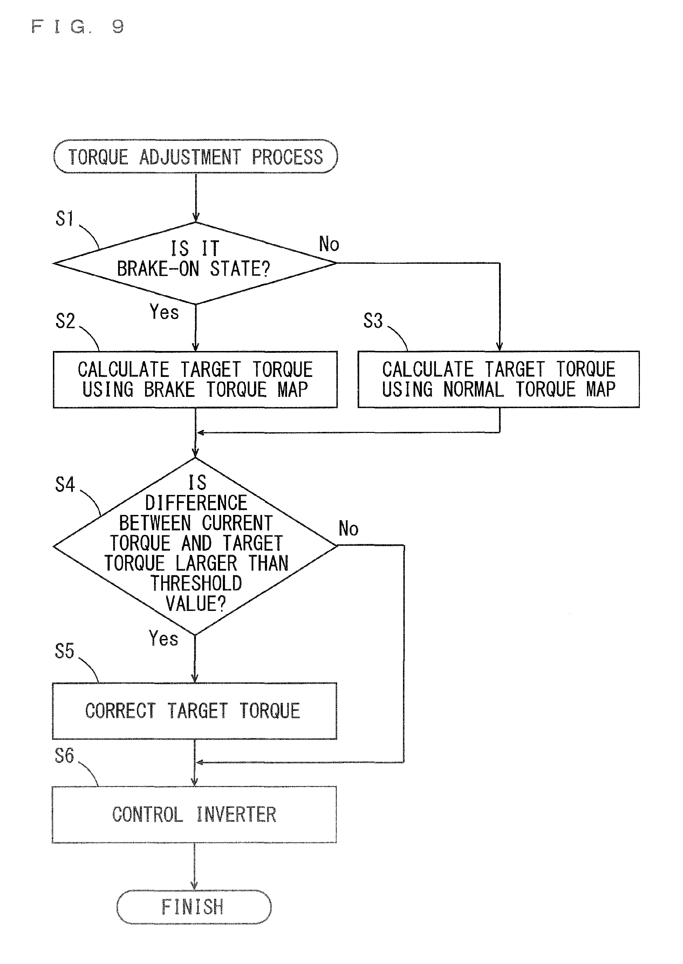

Fig. 9 is a flow chart of the torque adjustment process performed by the CPU 51 of Fig. 3. The torque adjustment process of Fig. 9 is periodically performed by the execution of the torque adjustment processing program stored in the ROM 52 by the CPU 51.

As shown in Fig. 9, the CPU 51 determines whether or not the electric vehicle 100 is in the brake-on state at that time point based on the detection result obtained by the brake sensors BS1, BS2 (step S1). When the electric vehicle 100 is in the brake-on state, the CPU 51 calculates the target torque using the brake torque map of Fig. 5 (step S2). On the other hand, when the electric vehicle 100 is in the brake-off state, the CPU 51 calculates the target torque using the normal torque map of Fig. 4 (step S3).

Next, the CPU 51 determines whether or not the difference between the actual torque (hereinafter referred to as a current torque) at that time point and the target torque calculated in step S2 or step S3 is larger than a predetermined threshold value (step S4). The current torque corresponds to the electric power supplied to the motor 8 at that time point. Therefore, the current torque can be calculated based on the electric power supplied to the motor 8 at that time point.

When the electric vehicle 100 switches from the brake-off state to the brake-on state, or switches from the brake-on state to the brake-off state, the difference between the current torque and the target torque is likely to be large. Therefore, when the difference between the current torque and the target torque is larger than the threshold value, the CPU 51 corrects the target torque calculated in step S2 or step S3 such that the difference between the target torque and the current torque is a predetermined difference value (step S5). Thus, the target torque decreases or increases at a time constant. The difference value may be the same as the threshold value of step S4, or may be smaller than the threshold value of step S4. Thereafter, the CPU 51 controls the inverter 54 such that the corrected target torque is generated by the motor 8 (step S6), and terminates the torque adjustment process.

In this manner, because the target torque is corrected such state, the difference between the target torque and the current torque is not larger than the threshold value, the actual torque is prevented from rapidly changing at the time of switching from the brake-off state to the brake-on state or at the time of switching from the brake-on state to the brake-off state.

On the other hand, if the electric vehicle 100 is kept in the brake-off state or the brake-on state for more than a predetermined time period, the difference between the current torque and the target torque is not likely to be large. Therefore, in step S4, when the difference between the current torque and the target torque is not more than the threshold value, the CPU 51 controls the inverter 54 such that the target torque calculated in step S2 or step S3 is generated by the motor 8 (step S5), and terminates the torque adjustment process.

### (6) Effects of Embodiment

In the electric vehicle 100 according to the present embodiment, if at least one of the brake levers 43, 44 is operated with the detected accelerator opening being larger than 0, the actual torque generated by the motor 8 gradually decreases. Thus, even when the accelerator opening is wrongly detected due to a problem at the accelerator sensor AS, the main body 1 can be easily decelerated and stopped. Further, the actual torque does not rapidly decrease at the time of operating the brake lever 43, 44. Therefore, even if the brake lever 43, 44 is operated at the time of turning the electric vehicle 100 or the like, the rider is unlikely to have an uncomfortable feeling.

On the other hand, when the operation of the brake lever 43, 44 is released while the accelerator grip 42 is operated, the actual torque generated by the motor 8 gradually increases. Thus, because the actual torque does not rapidly increase, the rider is unlikely to have an uncomfortable feeling, and sudden acceleration of the main body 1 and a sudden increase in speed are prevented.

Further, in the present embodiment, the target torque is calculated in the brake-off state based on the vehicle speed, the accelerator opening and the normal torque map, and the target torque is calculated in the brake-on state based on the vehicle speed, the accelerator opening and the brake torque map. In this manner, because different torque maps are used in the brake-off state and the brake-on state, the torque of the motor 8 can be appropriately adjusted in either one of the brake-off state and the brake-on state.

Further, in the present embodiment, the actual torque gradually changes from a value indicated by the normal torque map to a value indicated by the brake torque map at the time of switching from the brake-off state to the brake-on state, and the actual torque gradually changes from a value indicated by the brake torque map to a value indicated by the normal torque map at the time of switching from the brake-on state to the brake-off state. Thus, it is possible to easily perform acceleration or deceleration without giving the rider an uncomfortable feeling.

Further, in the present embodiment, in a case in which the maximum target torque obtained when the vehicle speed is 0 is a positive value and the vehicle speed is in a range of not less than 0 and less than S1, the brake torque map is set such that the maximum target torque gradually decreases as the vehicle speed increases. Thus, during a period in which the main body 1 is stopped or is moving at a low speed, if the accelerator grip 42 is operated, the torque of motor 8 does not become 0 even if the brake lever 43, 44 is operated. Thus, in a case in which the main body 1 is stopped or started during climbing, the main body 1 is prevented from retreating due to the inclination on the road. Therefore, the main body 1 can be stably stopped or started.

On the other hand, when the vehicle speed is not less than S1, the brake torque map is set such that the maximum target torque is 0. Therefore, during a period in which the main body 1 is moving at an intermediate or a high speed, if the brake lever 43, 44 is operated, the torque of the motor 8 becomes 0. Thus, the main body 1 can be easily decelerated and stopped by the operation of the brake lever 43, 44.

### (7) Another Example of Torque Map

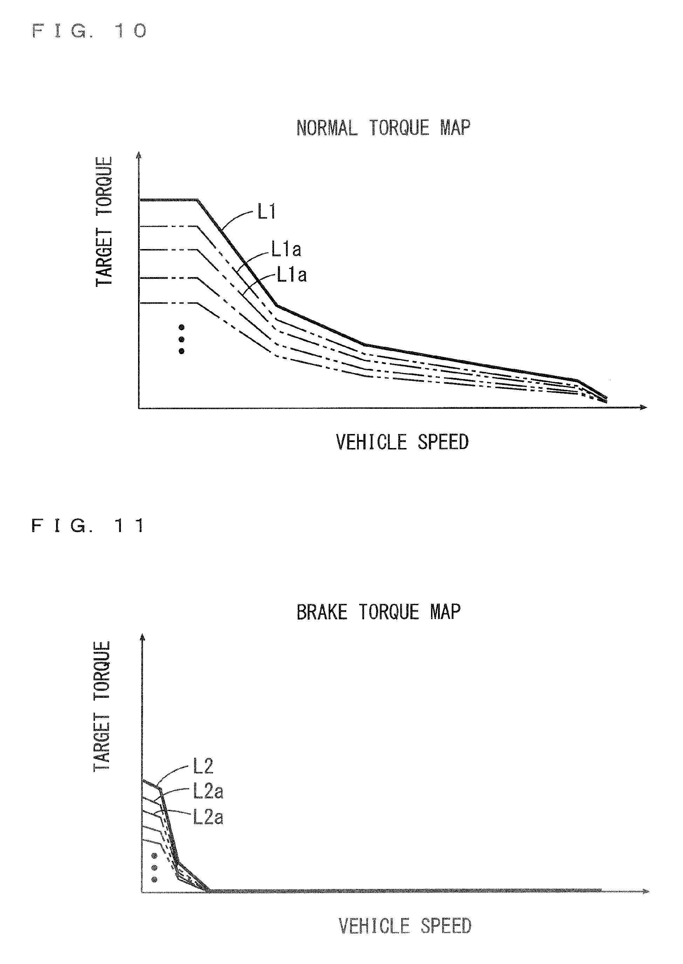

Fig. 10 is a diagram showing another example of the normal torque map. Fig. 11 is a diagram showing another example of the brake torque map. In Figs. 10 and 11, the abscissas indicate the vehicle speed, and the ordinates indicate the target torque. With regard to the normal torque map of Fig. 10 and the brake torque map of Fig. 11, difference from the normal torque map of Fig. 4 and the brake torque map of Fig. 5 will be described.

The solid line L1 of Fig. 10 indicates the relation between the vehicle speed and the maximum target torque similarly to the example of Fig. 4, and a plurality of two-dot dash lines L1a of Fig. 10 indicate the relation between the vehicle speed and the target torque at the accelerator openings that differ in steps. In Fig. 10, only the two-dot dash line L1a that corresponds to the accelerator opening in a partial range is shown, and the two-dot dash line L1a that corresponds to the accelerator opening in another range is not shown. A plurality of black dots of Fig. 10 mean that the two-dot dash lines L1a are not shown. In the brake-off state, the relation indicated by the solid line L1 or the one two-dot dash line L1a is selected based on the accelerator opening detected by the accelerator sensor AS. The target torque that corresponds to the vehicle speed detected by the vehicle speed sensor SS is obtained based on the selected relation.

The solid line L2 of Fig. 11 indicates the relation between the vehicle speed and the maximum target torque similarly to the example of Fig. 5, and the plurality of two-dot dash lines L2a of Fig. 11 indicate the relation between the vehicle speed and the target torque at the accelerator openings that differ in steps. In Fig. 11, only the two-dot dash line L2a that corresponds to the accelerator opening in a partial range is shown, and the two-dot dash line L2a that corresponds to the accelerator opening in another range is not shown. A plurality of black dots of Fig. 11 mean that the two-dot dash lines L2a are not shown. In the brake-on state, the relation indicated by the solid line L2 or the one two-dot dash line L2a is selected based on the accelerator opening detected by the accelerator sensor AS. The target torque that corresponds to the vehicle speed detected by the vehicle speed sensor SS is obtained based on the selected relation.

When the torque maps of Figs. 4 and 5 are used, the target torque that corresponds to the accelerator opening is calculated from the maximum target torque. Whereas, when the torque maps of Figs. 10 and 11 are used, the target torque that corresponds to the accelerator opening can be obtained without such calculation. Thus, the processing load of the CPU 51 (Fig. 3) is reduced, so that the quick process is possible.

### (8) Other Embodiments

### (8-1)

While the motor 8 is controlled such that the actual torque changes at a predetermined time constant at the time of switching from the brake-off state to the brake-on state, or at the time of switching from the brake-on state to the brake-off state in the above-mentioned embodiment, the control of the motor 8 at the time of switching from the brake-off state to the brake-on state, or at the time of switching from the brake-on state to the brake-off state is not limited to this. For example, a plurality of torque maps that indicate values of the target torque in steps between a value indicated by the normal torque map and a value indicated by the brake torque map are stored in the ROM 52. The target torque is calculated sequentially using the plurality of torque maps as the time elapses, and the motor 8 is controlled based on the calculated target torque. Even in this case, the actual torque can be gradually changed between a value indicated by the brake torque map and a value indicated by a normal torque map.

### (8-2)

While the motor 8 is controlled such that the torque of the motor 8 matches a value indicated by the brake torque map in the brake-on state in the above-mentioned embodiment, the invention is not limited to this. In the brake-on state, the motor 8 may be controlled such that the torque of the motor 8 becomes 0 regardless of the movement speed of the main body 1. In this case, when the electric vehicle 100 is switched from the brake-off state to the brake-on state, the torque of the motor 8 gradually decreases until the torque of the motor 8 is 0. Note that, when the torque of the motor 8 is 0, the energization to the motor 8 may be stopped.

### (8-3)

While the target torque is determined using the torque map in the above-mentioned embodiment, the invention is not limited to this. For example, the target torque may be determined by the calculation using each type of detection value.

### (8-4)

While the switching between the brake-off state and the brake-on state is performed according to the operation of at least one of the brake levers 43, 44 in the above-mentioned embodiment, the invention is not limited to this. The switching between the brake-off state and the brake-on state may be performed according to the operation of predetermined one (the brake lever 43 for braking the rear wheel 3, for example) of the brake levers 43, 44.

### (8-5)

While the rear wheel 3 is driven by the motor 8 in the above-mentioned embodiment, the invention is not limited to this. The front wheel 2 may be driven by the motor 8.

### (8-6)

While the movement speed (the vehicle speed) of the main body 1 is detected by the vehicle speed sensor SS provided at the front wheel 2 in the above-mentioned embodiment, the invention is not limited to this. For example, the rotation speed of the motor 8 may be detected, and the vehicle speed may be calculated based on the detection result. The rotation speed of the motor 8 may be detected by a rotation sensor such as an encoder that is incorporated in the motor 8, for example, or may be detected by another sensor.

### (8-7)

While the above-mentioned embodiment is an example in which the present invention is applied to the motorcycle, the invention is not limited to this. The present invention may be applied to another electric vehicle such as a motor tricycle, an automobile (a four-wheeled automobile) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the electric vehicle 100 is an example of an electric vehicle, the main body 1 is an example of a main body, the rear wheel 3 is an example of a drive wheel, the motor 8 is an example of a motor, the accelerator grip 42 is an example of an accelerator device, the brake levers 43, 44 are examples of a braking device and the controller 10 is an example of a controller.

Further, the normal torque map is an example of first torque information, the brake torque map is an example of second torque information, the vehicle speed sensor SS is an example of a speed detector, the accelerator sensor AS is an example of an operation amount detector, a range not less than 0 and less than S1 is an example of a first range, a range not less than S1 is an example of a second range and the battery 5 is an example of a battery.

As each of various elements recited in the claims, various other elements having configurations or functions described in the claims can be also used.

### INDUSTRIAL APPLICABILITY

The invention can be effectively utilized for various types of electric vehicles.

## Claims

1. An electric vehicle comprising:
a main body (1) having a drive wheel (3);
a motor (8) adapted to generate a torque for rotating the drive wheel (3);
an accelerator device (42) operated by a rider in order to adjust the torque of the motor (8);
an operation amount detector (AS) adapted to detect an operation amount of the accelerator device (42);
a braking device (43, 44) operated by the rider in order to brake the main body (1); and
a controller (10) adapted to control the motor (8) based on the operation amount detected by the operation amount detector (AS) and the operation of the braking device (43, 44) by the rider, wherein
the controller (10) adapted to control the motor (8) such that the torque of the motor (8) gradually decreases when the braking device (43, 44) switches from a non-operation state to an operation state with the torque being generated by the motor (8).

2. The electric vehicle according to claim 1, wherein
the controller (10) adapted to store first torque information and second torque information that respectively indicate the torque to be generated by the motor (8) according to a movement speed of the main body (1), to control the motor (8) based on the first torque information with the braking device (43, 44) not being operated and to control the motor (8) based on the second torque information with the braking device (43, 44) being operated,
the first and second torque information are set such that a value indicated by the second torque information with regard to each movement speed is smaller than a value indicated by the first torque information, and
the controller (10) adapted to control the motor (8) such that the torque of the motor (8) gradually changes from the value indicated by the first torque information to the value indicated by the second torque information when the braking device (43, 44) switches from the non-operation state to the operation state with the torque being generated by the motor (8).

3. An electric vehicle, comprising:
a main body (1) having a drive wheel (3);
a motor (8) that generates a torque for rotating the drive wheel (3);
an accelerator device (42) operated by a rider in order to adjust the torque of the motor (8);
an operation amount detector (AS) that detects an operation amount of the accelerator device (42);
a braking device (43, 44) operated by the rider in order to brake the main body (1); and
a controller (10) adapted to control the motor (8) based on the operation amount detected by the operation amount detector (AS) and the operation of the braking device (43, 44) by the rider, wherein
the controller (10) adapted to control the motor (8) such that the torque of the motor (8) gradually increases when the braking device (43, 44) switches from an operation state to a non-operation state with the accelerator device (42) being operated.

4. The electric vehicle according to claim 3, wherein
the controller (10) adapted to store first torque information and second torque information that respectively indicate the torque to be generated by the motor (8) according to a movement speed of the main body (1), to control the motor (8) based on the first torque information with the braking device (43, 44) not being operated and to control the motor (8) based on the second torque information with the braking device (43, 44) being operated,
the first and second torque information are set such that a value indicated by the second torque information with regard to each movement speed is smaller than a value indicated by the first torque information, and
the controller (10) adapted to control the motor (8) such that the torque of the motor (8) gradually changes from the value indicated by the second torque information to the value indicated by the first torque information when the braking device (43, 44) switches from the operation state to the non-operation state with the torque being generated by the motor (8).

5. The electric vehicle according to claim 2 or 4 further comprising a speed detector (SS) that detects a movement speed of the main body (1), wherein
the first and second torque information respectively indicate a relation among the movement speed of the main body (1), the operation amount of the accelerator device (42) and the torque to be generated by the motor (8), and
the controller (10) adapted to control the motor (8) based on the movement speed detected by the speed detector (SS), the operation amount detected by the operation amount detector (AS) and the first and second torque information.

6. The electric vehicle according to claim 5, wherein
the second torque information is set to indicate a value larger than 0 when the operation amount of the accelerator device (42) is larger than 0, and the movement speed of the main body (1) is not less than 0 and is in a first range that is smaller than a predetermined value, and to indicate 0 when the operation amount of the accelerator device (42) is larger than 0 and the movement speed of the main body (1) is in a second range that is more than the predetermined value.

7. The electric vehicle according to claim 6, wherein
the second torque information is set to indicate a value that decreases from a maximum value to 0 as the movement speed increases in the first range.

8. The electric vehicle according to one of claims 1 to 7, further comprising a battery (5),
wherein
the controller (10) adapted to adjust the torque of the motor (8) by adjusting electric power supplied from the battery (5) to the motor (8).
